# FASCICULE DE BREVET EUROPEEN

(11) **EP 0 427 641 B1**
(45) Date de publication et mention de la délivrance du brevet: **13.12.1995**
(21) Numéro de dépôt: 90420448.4
(22) Date de dépôt: 17.10.1990
(51) Int. Cl.: H01H 71/70, H01H 3/22

(54) **Dispositif de télécommande pour disjoncteur électrique**
Fernsteuerungsvorrichtung für einen elektrischen Schutzschalter
Remote control unit for an electric circuit breaker

(30) Priorité: 06.11.1989 FR 8914632
(43) Date de publication de la demande: 15.05.1991
(73) Titulaire: SCHNEIDER ELECTRIC SA, 92100 Boulogne Billancourt (FR)
(72) Inventeur: Cruz, Martine, F-38050 Grenoble Cedex (FR); Marin-Pache, Reynald, F-38050 Grenoble Cedex (FR); Aubert, Yves, F-38050 Grenoble Cedex (FR); Serpinet, Marc, F-38050 Grenoble Cedex (FR)
(74) Mandataire: Hecké, Gérard

(56) Documents cités:
- EP-A- 0 008 989
- EP-A- 0 034 966
- EP-A- 0 143 022
- EP-A- 0 150 756
- WO-A-87/01237
- DE-A- 1 665 820
- FR-A- 2 378 345
- GB-A- 1 103 239
- GB-A- 2 185 631
- US-A- 3 778 633

## Description

L'invention est relative à un bloc de télécommande adaptable à un disjoncteur électrique à manette pivotante susceptible d'occuper une position de fermeture, une position d'ouverture, et une position intermédiaire ouvert après déclenchement sur défaut, la manette étant accouplée à un tiroir de transmission d'un mécanisme coopérant avec un groupe motoréducteur et une commande manuelle de secours à poignée rotative agencée sur la face avant du bloc, le mécanisme ayant une première came d'entraînement associée à une chaîne cinématique de liaison capable de transmettre les mouvements de rotation du groupe motoréducteur et de la poignée à la manette pour les opérations automatiques et manuelles d'ouverture et de fermeture du disjoncteur, et réciproquement le mouvement de pivotement de la manette au tiroir de transmission lors d'un déclenchement automatique.

Les documents FR 2476906 (& EP-A-0 034 966) et EP 150756 se rapportent à des dispositifs de télécommande comprenant un train d'engrenages réducteur entraîné en rotation par un pignon d'un moteur électrique tournant du type universel. La sortie du train d'engrenages comporte un mécanisme différentiel à planétaires et satellites. Il en résulte une fermeture brusque du disjoncteur par libération d'un accrochage autorisant la détente d'un ressort de fermeture. De tels dispositifs à commande brusque, notamment inférieure à 100 millisecondes, sont onéraux et particulièrement adaptés à des disjoncteurs de forts calibres, par exemple supérieurs à 400 A.

L'objet de l'invention consiste à réaliser un bloc de télécommande à fermeture lente, facilement adaptable à un disjoncteur à boîtier moulé.

Le bloc de télécommande selon l'invention est caractérisé en ce que :
- le tiroir de transmission comporte une paire de galets coopérant avec la première came d'entraînement animée d'un même sens de rotation pour les opérations d'ouverture et de fermeture,
- un indicateur mécanique bistable est déplaçable entre une position active de signalisation du déclenchement, et une position inactive de non déclenchement,
- un poussoir de déclenchement coopère avec l'indicateur en fonction de la position du tiroir, de manière à verrouiller l'indicateur en position inactive lorsque le disjoncteur est dans la position de fermeture, et pour autoriser l'actionnement de l'indicateur vers la position active suite à l'entraînement du tiroir par la manette en cas de déclenchement, la première came restant fixe pour immobiliser la poignée en position de fermeture;
- et un disque de positionnement est susceptible de rappeler l'indicateur vers la position inactive lors de la phase de réarmement intervenant par actionnement de la poignée vers la position d'ouverture.

La face avant est équipée d'un sélecteur destiné à occuper une première position de réglage en mode automatique, et une deuxième position de réglage en mode normal, le passage de la première position vers la deuxième position provoquant la neutralisation automatique du groupe motoréducteur, et/ou l'actionnement d'un contact de blocage des ordres électriques de télécommande.

Le sélecteur comporte une bague rotative à taquet de débrayage agencé pour séparer le pignon de la couronne en position débrayée lors du passage du sélecteur vers la deuxième position de réglage, et réciproquement pour autoriser l'engagement du pignon sur la couronne en position embrayée lors de l'actionnement inverse du sélecteur vers la première position de réglage.

L'ensemble groupe motoréducteur, la commande manuelle de secours à poignée et la chaîne cinématique de liaison avec la première came d'entraînement, est solidaire d'une partie escamotable, monté à basculement sur un axe d'un socle fixe d'adaptation à la face avant du disjoncteur, le déplacement à coulissement alterné du tiroir de transmission s'effectuant dans le socle par l'intermédiaire d'organes de guidage. Le rotation de la poignée et de la première came d'entraînement, s'opère toujours dans le même sens. Le moteur électrique est du type vibrant associé à un système de roues libres pour la transformation du mouvement de vibration de l'armature en un mouvement unidirectionnel de rotation pas à pas.

Le socle renferme un bornier de raccordement accessible après basculement relatif de la partie basculante par rapport au socle, ledit bornier étant monté amovible pour dégager le passage vers le fond ouvert, en communication avec les auxiliaires du disjoncteur.

D'autre avantages et caractéristiques ressortiront plus clairement de la description qui va suivre d'un mode de réalisation de l'invention, donné à titre d'exemple non limitatif et représenté aux dessins annexés, dans lesquels:
- la figure 1 est une vue en perspective du bloc de télécommande 10 prêt à être adapté au disjoncteur;
- la figure 2 montre une vue identique à la figure 1, après basculement d'une partie du bloc de télécommande;
- les figures 3 et 4 représentent des coupes selon les lignes 3-3 et 4-4 de la fig. 1;
- la figure 5 est une vue en coupe selon la ligne 5-5 de la figure 4;
- la figure 6 est une vue en coupe selon la ligne 6-6 de la fig. 4 en position embrayée du groupe motoréducteur, le sélecteur étant dans une première position de réglage en mode automatique;
- la figure 7 est une vue identique de la fig. 6, en position débrayée du groupe motoréducteur, le sélecteur se trouvant dans une deuxième position de réglage en mode manuel;
- la figure 8 montre une vue schématique partielle en perspective du mécanisme de télécommande, représenté en position F de fermeture (traits continus) et en position D de déclenchement (traits discontinus);
- les figures 9 et 10 sont des vues en plan de la fig. 8 respectivement en position F de fermeture, et en position D de déclenchement du tiroir de transmission;
- les figures 11, 12 et 13 représentent une vue partielle de la fig. 5, respectivement en position F de fermeture, D de déclenchement et 0 d'ouverture du tiroir de transmission;
- la figure 14 montre une vue schématique du moteur électrique de commande du groupe motoréducteur.

Sur les figures, un bloc de télécommande 10 est logé dans un boîtier isolant adaptable à la face avant d'un disjoncteur (non représenté) pour des opérations de délestage/relestage, écrêtage de puissance, et inversion de source.

Le disjoncteur est du type à boîtier isolant moulé décrit notamment dans les brevets français 2436491 et 2553928, et ayant une manette 11 pivotante faisant saillie de la face avant pour occuper une position F de fermeture, une position D de déclenchement ouvert sur défaut, et une position O d'ouverture.

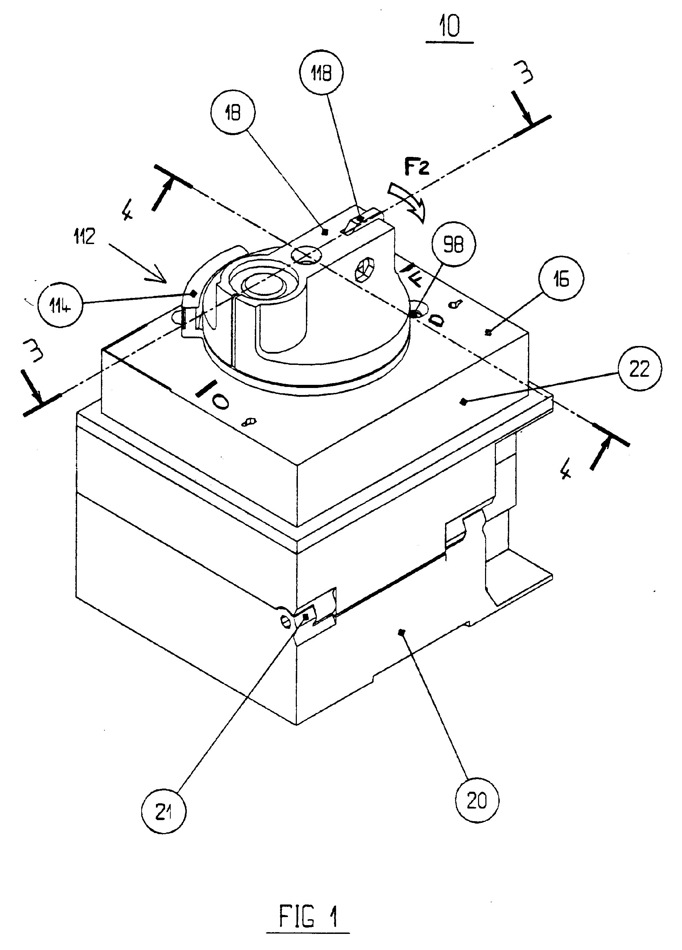

Le mécanisme 12 du bloc de télécommande 10 comporte un groupe motoréducteur 14 permettant d'entraîner automatiquement la manette 11 du disjoncteur à partir d'ordres impulsionnels de fermeture et d'ouverture. La face avant 16 du bloc de télécommande 10 est équipée d'autre part d'une poignée 18 rotative d'une commande manuelle de secours à deux positions O ouvert / F fermé diamétralement opposées (Fig 1), coopérant avec le mécanisme 12 pour transmettre les mouvements de rotation de la poignée 18 à la manette 11 pour l'ouverture et la fermeture manuelle du disjoncteur.

Le boîtier du bloc de télécommande 10 est formé par un socle 20 d'adaptation monté fixe sur la face avant disjoncteur, et une partie 22 basculante équipée du groupe motoréducteur 14 et de la poignée 18. La partie 22 est montée à basculement limité sur un axe 21 du socle 20.

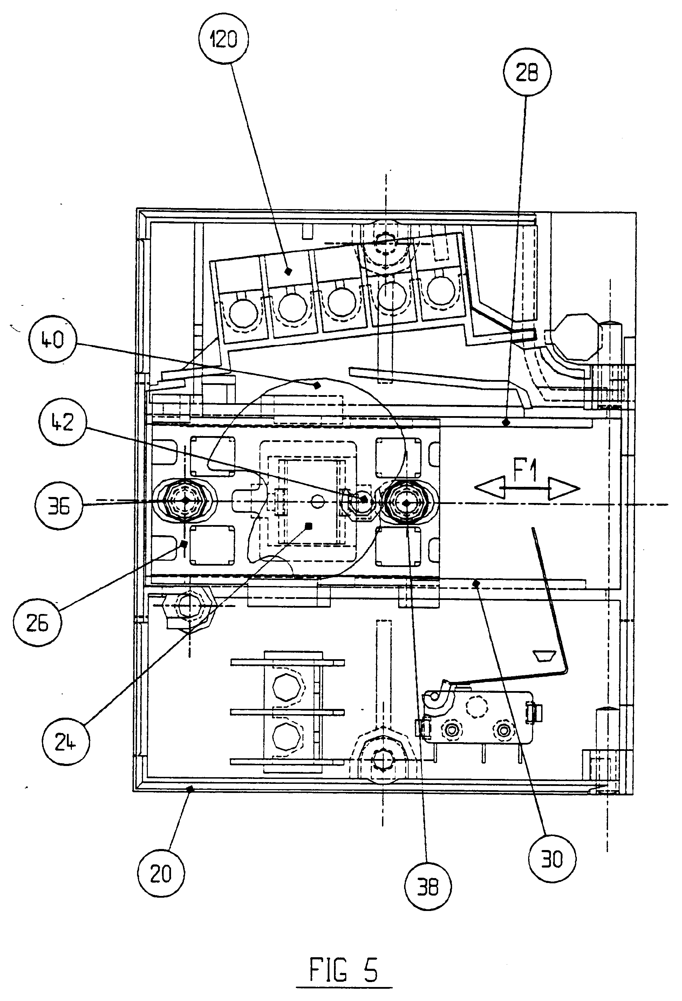

Le socle 20 comporte un fond ouvert 23 autorisant l'insertion de la manette 11 dans une ouverture 24 d'un tiroir 26 de transmission, lequel est monté à coulissement alterné selon la direction transversale (voir flèche F1, fig. 5). Le guidage du tiroir 26 mobile s'opère au moyen de deux rainures opposées déplaçables le long de deux épaulements 28, 30 parallèles venant du moulage avec parois 32, 34 intermédiaires fixes du socle 20. Le tiroir 26 de transmission est équipé de deux galets 36, 38 coopérant avec une première came 40 d'entraînement, située dans l'autre partie 22 du bloc de télécommande 10.

La première came 40 d'entraînement est disposée sous le groupe motoréducteur 14, en étant accouplée mécaniquement à une couronne 44 de transmission et à la poignée 18 par un premier arbre 42 rotatif. Le groupe motoréducteur 14 comporte un moteur 46 électrique vibrant, destiné à entraîner un pignon 48 de commande par l'intermédiaire d'un deuxième arbre 60 associé à un dispositif de transformation d'un mouvement alternatif en un mouvement unidirectionnel de rotation, tel que décrit dans le brevet français 2593323.

Le moteur 46 (fig. 14) comporte un électro-aimant 50 ayant un circuit magnétique ou culasse 52 en forme de U, équipé de deux bobines d'excitation 51, 53, et de deux surfaces polaires 54, 56 susceptibles de coopérer avec une armature 58 oscillante associée à un deuxième arbre 60 s'étendant parallèlement au premier arbre 42. L'alimentation des bobines 51, 53 s'effectue au moyen d'un courant redressé mono alternance, permettant d'attirer l'armature 58 vers une position active, représentée en traits discontinus sur la figure 14. Un ressort de rappel 62 sollicite l'armature 58 dans le sens des aiguilles d'une montre vers une position inactive (en traits pleins). L'armature comporte deux bras 64, 66 susceptibles de se déplacer en regard des faces polaires 54, 56 associées de la culasse 52. La fréquence de vibration de l'armature 58 est égale ou multiple de celle du courant d'excitation des bobines 51, 53. La face polaire 56 est rectiligne avec une inclinaison prédéterminée par rapport au plan médian de trace 68. Le bras 66 de l'armature 58 vient en butée contre la face polaire 56 en position active. L'autre face polaire 54 de la culasse 52 est discontinue et est séparée en permanence du bras 64 par un entrefer radial centré sur l'arbre 60. Cette dissymétrie du circuit magnétique 52 permet d'obtenir une course constante à chaque oscilation, et un couple régulier quel que soit la valeur de l'angle d'oscillation. Il en résulte un meilleur rendement du moteur 46 vibrant.

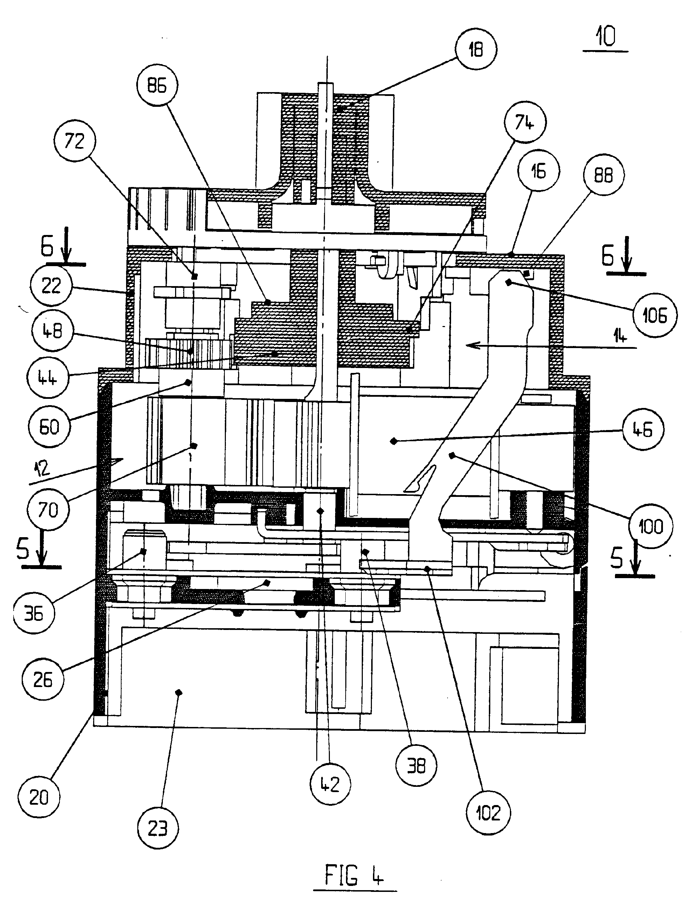

La vibration de l'armature 58 est transformée en un mouvement de rotation progressif par une première roue libre 70 (fig. 4) d'entraînement entourant l'arbre 60 au niveau de l'armature 58. Une deuxième roue libre 72 de retenue, calée sur l'arbre 60 au dessus du pignon 48, est active en direction opposée de la première roue libre 70 pour s'opposer à une rotation inverse de l'arbre 60.

Etant donné que les dents du pignon 48 engrènent en position embrayée avec celles de la couronne 44 de transmission, il en résulte que l'actionnement de la poignée 18 s'effectue exclusivement dans un sens de rotation prédéterminé, par exemple le sens des aiguilles d'une montre représentée par la flèche F2. La rotation inverse de la poignée 18 est inhibée par la présence de la deuxième roue libre 72. La rotation de la couronne 44 s'opère dans le sens F2 d'actionnement de la poignée 18 et de la première came 40, mais en sens inverse de l'arbre 60 et du pignon 48 (flèche F3) associé au moteur 46.

La première came 40 d'entraînement de tiroir 26 suit le mouvement manuel de la poignée 18, en faisant un demi-tour pour chaque opération de fermeture ou d'ouverture.

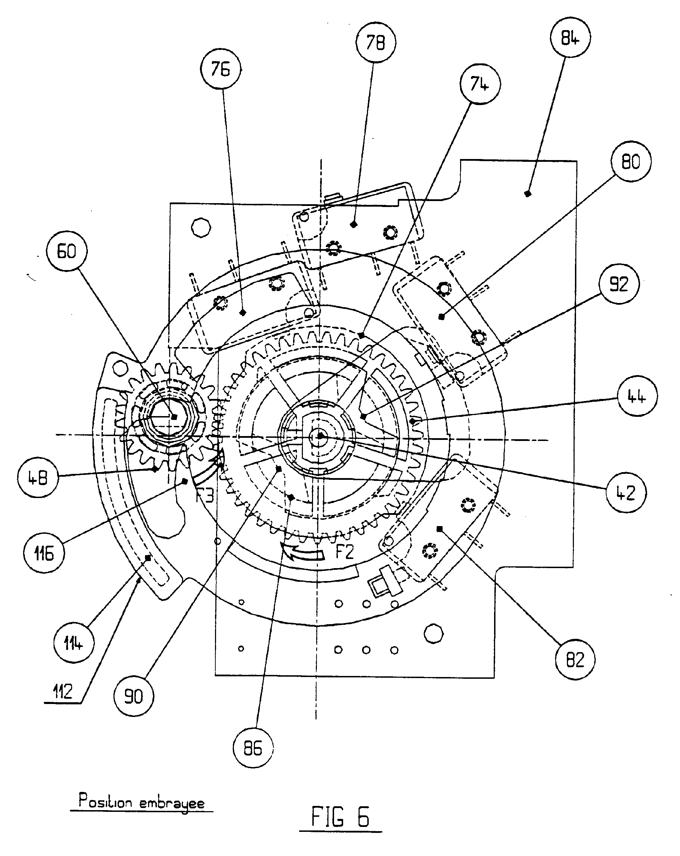

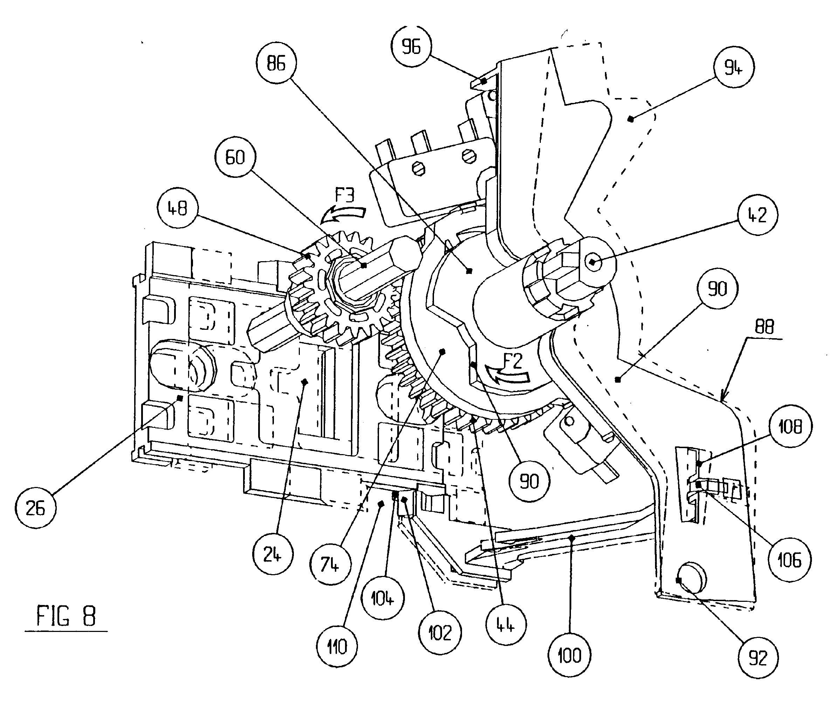

Au-dessus de la couronne 44 de transmission est agencée une deuxième came 74 de commande (Fig. 6-10) coopérant avec une série de contacts 76, 78, 80, 82 répartis sur un circuit imprimé d'une carte électronique 84. Le premier contact 76 sert à l'autoalimentation du bloc 10, le deuxième contact 78 signale électriquement le déclenchement sur défaut du disjoncteur, le troisième contact 80 sert à la sélection automatique/manuel, et s'ouvre sur action manuelle et cadenassage, et le quatrième contact 82 inverseur de fin de course ouverture et fermeture autorise l'envoi d'ordres permanents non simultanés.

Un disque 86 de positionnement est calé sur le premier arbre 42 au-dessus de la deuxième came 74 de commande pour coopérer avec un indicateur 88 mécanique de déclenchement. Le disque 86 est doté de deux encoches 90, 92 en forme de V diamétralement opposées, et constitue une pièce monobloc moulée avec l'arbre de la poignée 18, la deuxième came 74 et la couronne 44 de transmission.

L'indicateur 88 mécanique de déclenchement est formé par un levier 90 ayant un orifice 92 d'articulation, un voyant 94 coloré en rouge, et un ergot 96 de commande du deuxième contact 78 défaut. Le levier 90 est placé entre la carte électronique 84 et la paroi interne de la face avant 16, après introduction de l'orifice 92 d'articulation sur un axe du boîtier. En position déclenchée, le voyant 94 vient en regard d'une fenêtre 98 (fig. 1) ménagée dans la face avant 16. Le débattement angulaire de l'indicateur 88 mécanique bistable s'effectue dans un plan parallèle à la face avant 16 entre une position active de signalisation du déclenchement, et une position inactive de non déclenchement.

Un poussoir 100 de déclenchement est sollicité par un ressort vers le tiroir 26 de transmission, et comporte à l'une de ses extrémités un tenon 102 prenant appui sur un rebord 104 du tiroir 26 lorsque la poignée 18 se trouve dans la position F fermé, correspondant à la position de fermeture de la manette 11 du disjoncteur. L'autre extrémité 106 du poussoir 100 coopère avec un logement 108 de l'indicateur 88, prévu au voisinage de l'orifice 92 d'articulation.

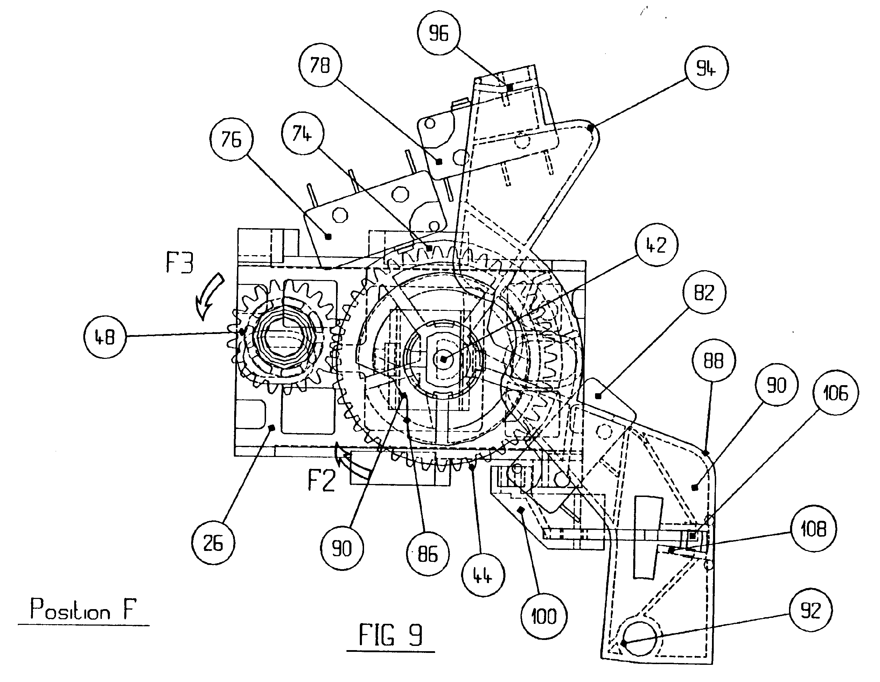

En position F fermé, l'extrémité 106 est engagée dans le logement 108 de manière à verrouiller l'indicateur 88 dans la position inactive (fig. 9).

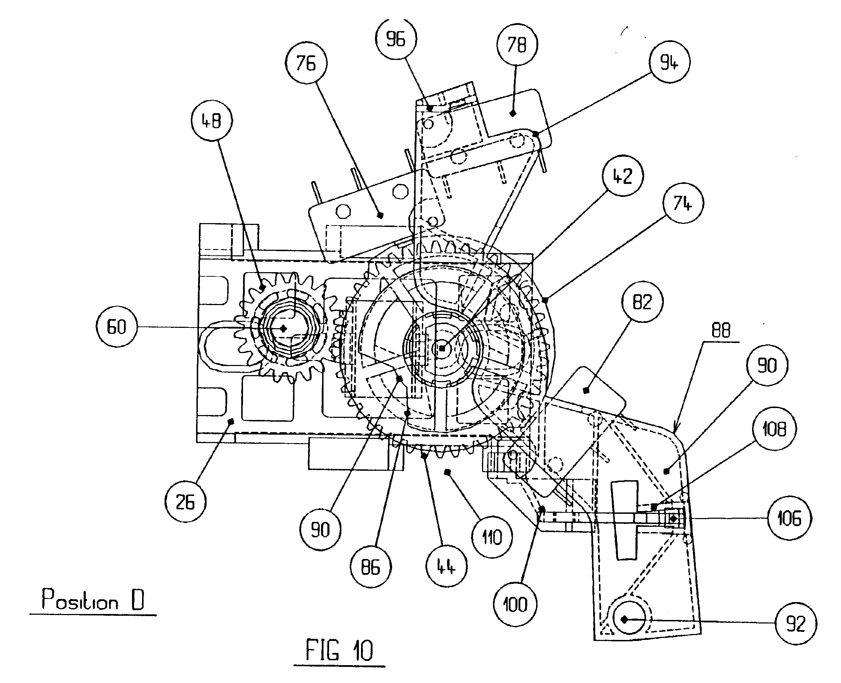

En position D de déclenchement (fig. 10), le tenon 102 du poussoir 100 tombe dans une encoche 110 latérale du tiroir 26 et l'extrémité 106 du poussoir 100 quitte le logement 108 pour libérer l'indicateur 88, lequel est alors sollicité vers la position active de mise en regard du voyant 94 avec la fenêtre 98. La rotation de l'indicateur 88 provoque en même temps l'actionnement du deuxième contact 78 défaut par l'ergot 96.

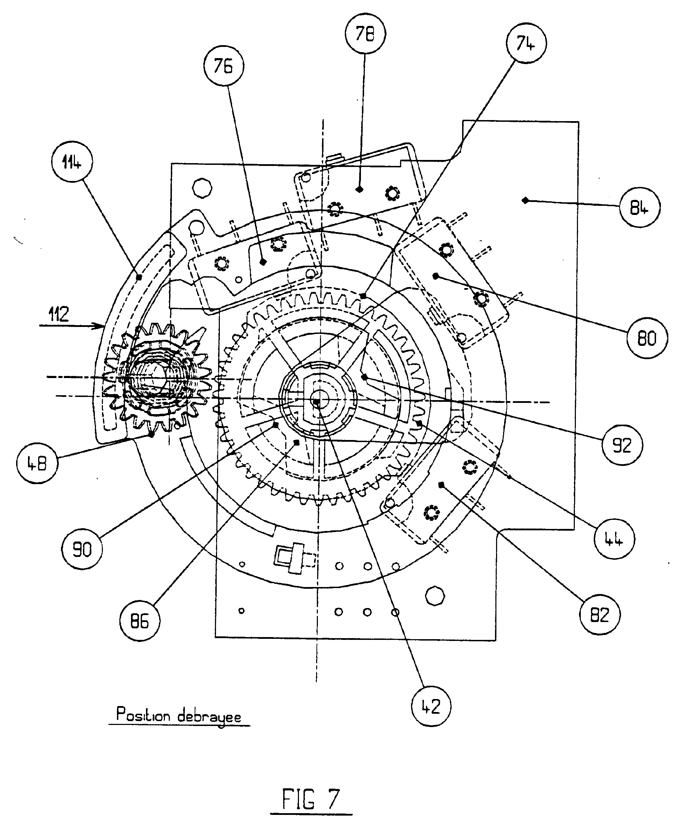

Le bloc de télécommande 10 est pourvu d'un sélecteur 112 automatique/manuel constitué par une bague 114 rotative située au voisinage de la poignée 18, et susceptible d'occuper une première position (fig.6) de réglage en mode automatique, et une deuxième position de réglage en mode manuel (fig. 7). La bague 114 du sélecteur 112 est équipée d'un taquet 116 (fig. 6) de débrayage en forme de rampe, permettant de séparer le pignon 48 de la couronne 44 de transmission lors du passage de mode automatique vers le mode manuel.

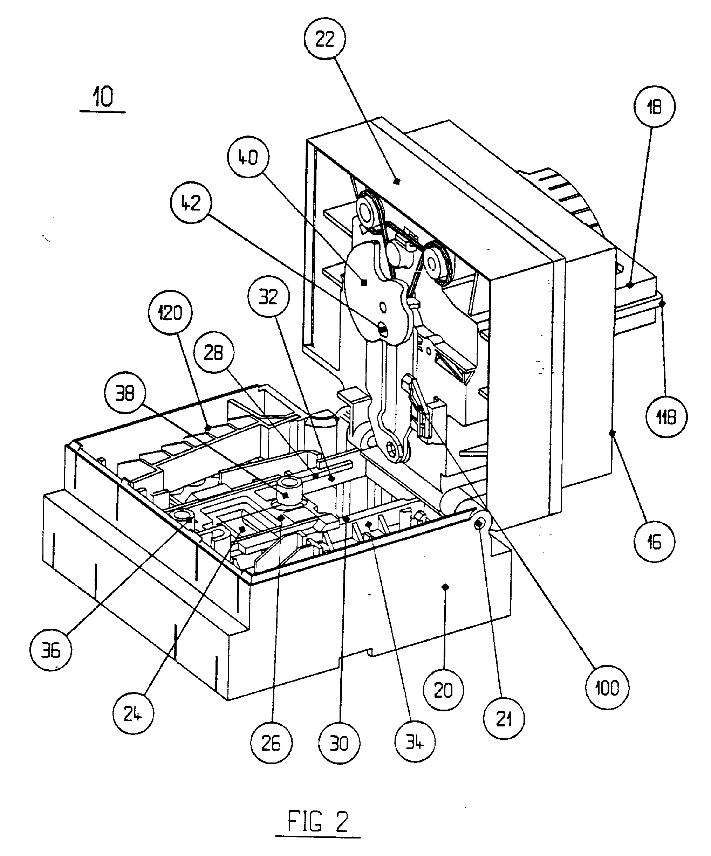

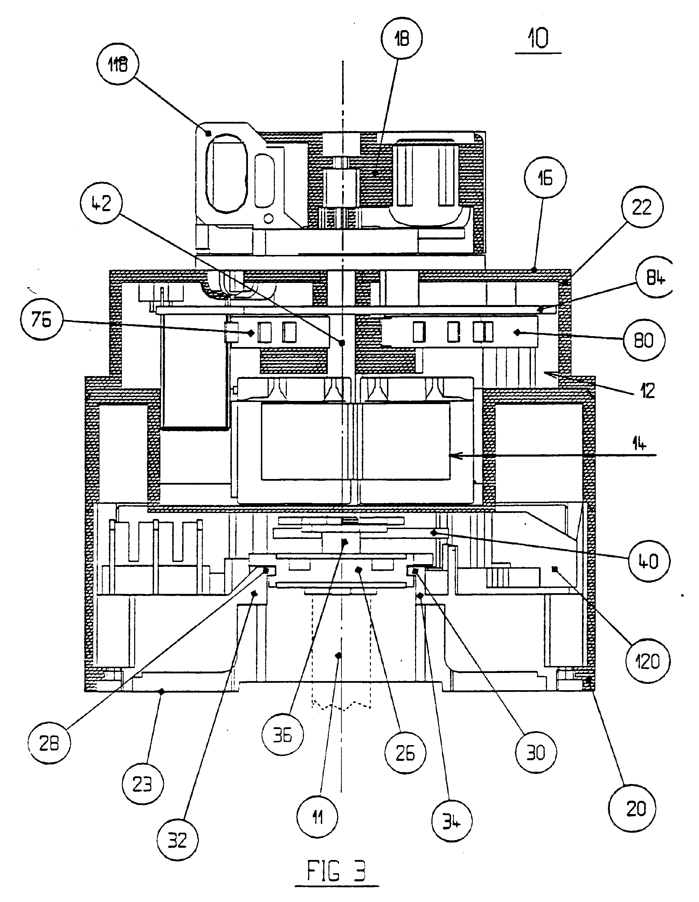

A la poignée 18 est associée une tirette 118 de cadenassage (fig. 1 à 3) agencée pour verrouiller le disjoncteur en position ouvert, et interdire l'utilisation du mode automatique.

Un bornier 120 (fig. 5) de raccordement du bloc de télécommande est positionné en biais à l'intérieur et est facilement accessible après basculement de la partie 22 du groupe motoréducteur 14. Le bornier 120 est monté amovible pour dégager le passage vers le fond ouvert 23 du socle 22, autorisant l'accès des auxiliaires du disjoncteur sans démontage du socle 22.

Le fonctionnement du bloc de télécommande 10 selon les figures 1 à 14 est le suivant :

### MODE AUTOMATIQUE

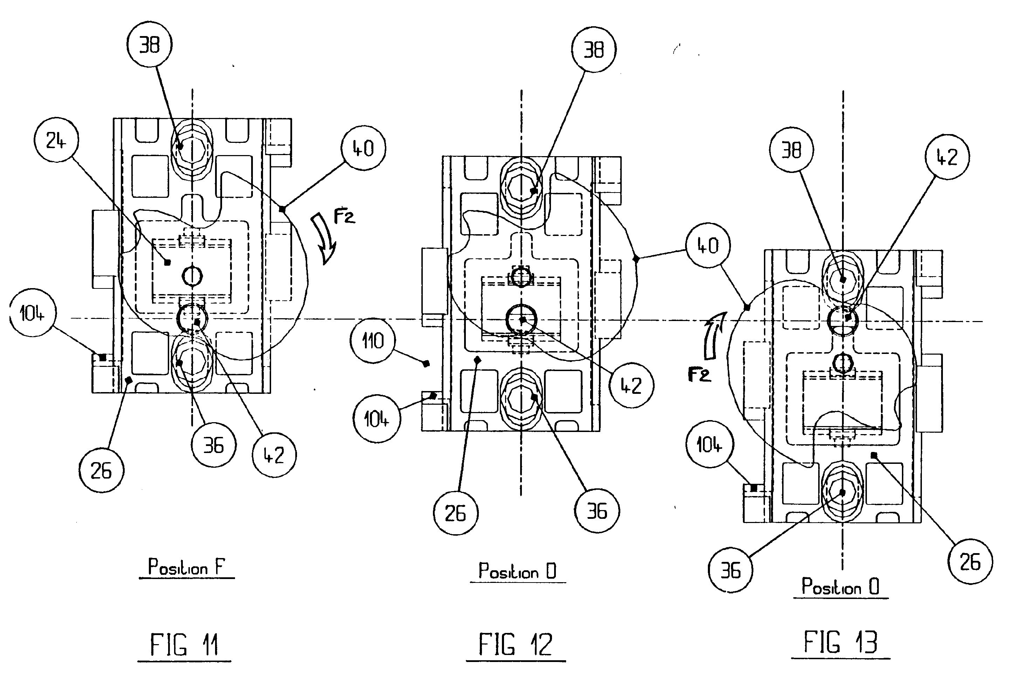

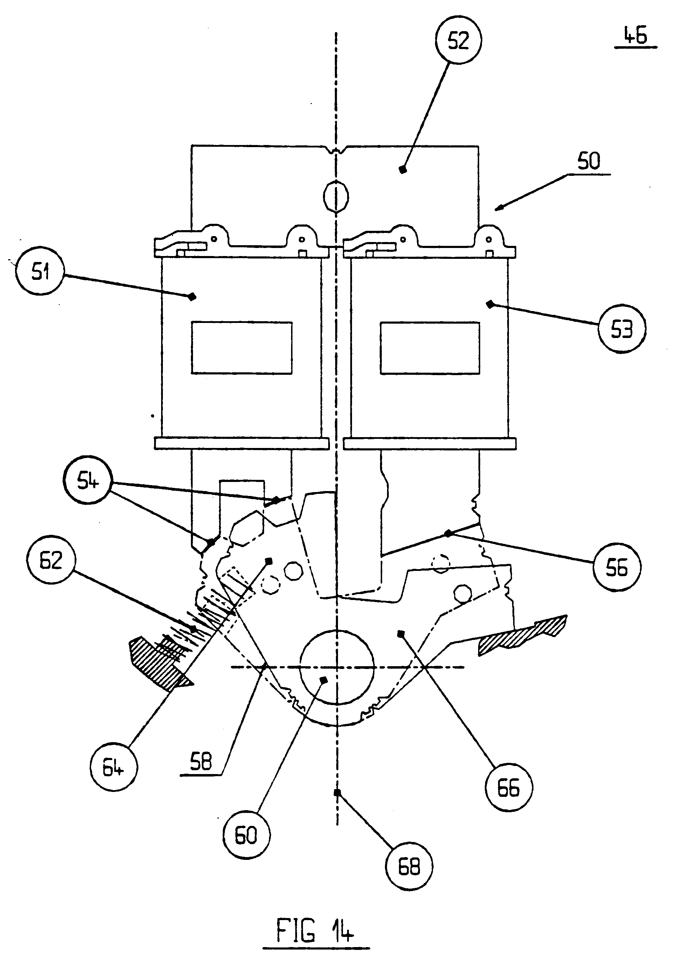

Le sélecteur 112 occupe la première position de réglage (fig. 1 et 6), correspondant à la position embrayée du pignon 48 avec la couronne 44 de transmission. La télécommande s'opère par alimentation du moteur 46 à partir de deux ordres électriques de fermeture ou d'ouverture. La rotation du deuxième arbre 60, et du pignon 48 dans le sens trigonométrique (flèche F3), provoque la rotation inverse (flèche F2) de la couronne 44 de transmission, et de la première came 40, laquelle entraîne le tiroir 26 par l'intermédiaire de l'un des galets 36, 38, entre la position F de fermeture (fig. 11), et la position 0 d'ouverture (fig. 13). La poignée 18 est entraînée simultanément par la couronne 44 dans le sens des aiguilles d'une montre (flèche F2) pour visualiser l'état du disjoncteur au niveau de la face avant 16 du bloc de télécommande 10.

En mode automatique, l'action manuelle sur la poignée 18 reste néanmoins prioritaire sur la télécommande. La présence de la roue libre 72 de retenue sur le deuxième arbre 60 rotatif du pignon 48 impose un seul sens de rotation (flèche F2) de la poignée 18 et des cames d'entraînement 40 et de commande 74.

### DECLENCHEMENT DU DISJONCTEUR

En cas de déclenchement du disjoncteur, la manette 11 est déplacée de la position F de fermeture vers la position intermédiaire D ouvert sur défaut. Le débattement de la manette 11 entraîne la translation du tiroir 26 à partir de la position F de la figure 11 vers la position D de la figure 12. Le tenon 102 du poussoir 100 de déclenchement s'engage dans l'encoche 110 latérale du tiroir 26, provoquant la libération de l'indicateur 88 mécanique, et son actionnement vers la position active (fig. 10) mettant le voyant 94 en regard de la fenêtre 98, pour indiquer l'état déclenché. La poignée 18 et le premier arbre 42 restent immobilisé en position de fermeture, étant donné que le galet 38 ne vient pas en engagement avec la première came 40 lorsque le tiroir 26 se trouve dans la position D de déclenchement (fig. 12). Le deuxième contact 78 défaut s'ouvre simultanément par l'action de l'ergot 96 de l'indicateur 88 mécanique.

Le réarmement du deuxième contact 78 défaut s'effectue ensuite manuellement par la rotation de la poignée 18 (flèche F2) vers la position d'ouverture. Le disque 86 de positionnement repousse simultanément l'indicateur 88 mécanique vers la position inactive.

### MODE MANUEL

L'actionnement du sélecteur 112 vers la deuxième position de réglage (fig. 7) provoque le débrayage du pignon 48 suite à l'action d'écartement de la rampe du taquet 116. Le troisième contact 80 s'ouvre. Les ordres électrique de télécommande ne sont plus exécutés, seules les manoeuvres de la poignée 18 rotative sont prises en compte.

La rotation de la poignée 18 dans le sens de la flèche F2 entraîne directement le premier arbre 42 rotatif avec le disque 86, la deuxième came 74 de commande, la couronne 44 et la première came 40 d'entraînement du tiroir 26. Ce dernier entraîne la manette 11 du disjoncteur entre les positions F de fermeture (fig. 11) et 0 d'ouverture (fig. 13). L'indicateur 88 mécanique est maintenu positivement en position inactive par le disque 86 de positionnement durant la manoeuvre de la poignée 18.

## Revendications

1. Bloc de télécommande adaptable à un disjoncteur électrique à manette (11) pivotante susceptible d'occuper une position de fermeture (F), une position d'ouverture (O), et une position intermédiaire (D) ouvert après déclenchement sur défaut, la manette (11) étant accouplée à un tiroir (26) de transmission d'un mécanisme (12) coopérant avec un groupe motoréducteur (14) et une commande manuelle de secours à poignée (18) rotative agencée sur la face avant (16) du bloc (10), le mécanisme (12) ayant une première came (40) d'entraînement associée à une chaîne cinématique de liaison capable de transmettre les mouvements de rotation de la poignée (18) à la manette (11) pour les opérations automatiques et manuelles d'ouverture et de fermeture du disjoncteur et réciproquement le mouvement de pivotement de la manette (11) au tiroir (26) de transmission lors d'un déclenchement automatique du disjoncteur,
caractérisé en ce que
- le tiroir (26) de transmission comporte une paire de galets (36, 38) coopérant avec la première came (40) d'entraînement animée d'un même sens de rotation pour les opérations d'ouverture et de fermeture,
- un indicateur (88) mécanique bistable est déplaçable entre une position active de signalisation du déclenchement, et une position inactive de non déclenchement,
- un poussoir (100) de déclenchement coopère avec l'indicateur (88) en fonction de la position du tiroir (26), de manière à verrouiller l'indicateur (88) en position inactive lorsque le disjoncteur est dans la position de fermeture (F), et pour autoriser l'actionnement de l'indicateur (88) vers la position active suite à l'entraînement du tiroir (26) par la manette (11) en cas de déclenchement, la première came (40) restant fixe pour immobiliser la poignée (18) en position de fermeture;
- et un disque (86) de positionnement est susceptible de rappeler l'indicateur (88) vers la position inactive lors de la phase de réarmement intervenant par actionnement de la poignée (18) vers la position d'ouverture.

2. Bloc de télécommande selon la revendication 1, caractérisé en ce que la face avant (16) est équipée d'un sélecteur (112) destiné à occuper une première position de réglage en mode automatique, et une deuxième position de réglage en mode manuel, le passage de la première position vers la deuxième position provoquant la neutralisation automatique du groupe motoréducteur (14) et/ou l'actionnement d'un contact (80) de blocage des ordres électriques de télécommande.

3. Bloc de télécommande selon la revendication 2, le groupe motoréducteur (14) ayant un moteur (46) électrique accouplé à un pignon (48) de commande d'une couronne (44) de transmission, caractérisé en ce que le sélecteur (112) comporte une bague (114) rotative à taquet (116) de débrayage agencé pour séparer le pignon (48) de la couronne (44) en position débrayée lors du passage du sélecteur (112) vers la deuxième position de réglage, et réciproquement pour engager le pignon (48) sur la couronne (44) en position embrayée lors de l'actionnement inverse du sélecteur (112) vers la première position de réglage.

4. Bloc de télécommande selon l'une des revendications 1 à 3, caractérisé en ce que l'ensemble groupe motoréducteur (14), la commande manuelle de secours à poignée (18) et la chaîne cinématique de liaison avec la première came (40) d'entraînement, est solidaire d'une partie (22) escamotable, monté à basculement sur un axe (21) d'un socle (20) fixe d'adaptation à la face avant du disjoncteur, le déplacement à coulissement alterné du tiroir (26) de transmission s'effectuant dans le socle (20) par l'intermédiaire d'organes de guidage (28, 30).

5. Bloc de télécommande selon la revendication 3 ou 4, caractérisé en ce que la chaîne cinématique de liaison du mécanisme (12) comporte un premier arbre (42) rotatif sur lequel sont montées coaxialement la poignée (18), la couronne (44) de transmission, et la première came (40) d'entraînement, et un deuxième arbre (60) à rotation inverse de support du pignon (48) de commande, les deux arbres (42, 60) s'étendant parallèlement l'un à l'autre selon une direction perpendiculaire à la face avant (16).

6. Bloc de télécommande selon la revendication 5, caractérisé en ce que le moteur (46) comporte un électroaimant (50) à circuit magnétique (52) dissymétrique coopérant avec une armature (58) oscillante associée au deuxième arbre (60) par l'intermédiaire d'un système de transformation du mouvement de vibration de l'armature (58) en un mouvement unidirectionnel de rotation pas à pas, ayant un sens prédéterminé (F3) inverse de celui (F2) du premier arbre (452) rotatif, le circuit magnétique (52) en forme de U comprenant une première face polaire (56) rectiligne contre laquelle vient en butée l'un des bras (66) de l'armature (58), et une deuxième face polaire (54) discontinue séparée en permanence de l'autre bras (64) de l'armature (58) par un entrefer radial.

7. Bloc de télécommande selon la revendication 6, caractérisé en ce que le système de transformation de mouvement de l'armature (58) comporte une première roue libre (70) d'entraînement du deuxième arbre (60) rotatif dans le sens prédéterminé (F3), et une deuxième roue libre (72) de retenue, active en direction opposée de la première roue libre (70) pour s'opposer à une rotation inverse du deuxième arbre (60).

8. Bloc de télécommande selon l'une des revendications 6 à 7, caractérisé en ce que le socle (20) renferme un bornier (120) de raccordement accessible après basculement relatif de la partie (22) par rapport au socle (20), ledit bornier étant monté amovible pour dégager le passage vers le fond ouvert (23) en communication avec les auxiliaires du disjoncteur.

9. Bloc de télécommande selon l'une des revendications 5 à 8, caractérisé en ce que le premier arbre (42) rotatif entraîne une deuxième came (74) pour la commande d'une série de contacts (76, 78, 80, 82) répartis sur un circuit imprimé d'une carte électronique (84).

10. Bloc de télécommande selon l'une des revendications 1 à 9, caractérisé en ce que le poussoir (100) de déclenchement comporte un tenon (102) agencé pour prendre appui sur un rebord (104) du tiroir (26) lorsque le disjoncteur se trouve dans la position de fermeture (F), et pour s'engager dans une encoche (110) latérale du tiroir (26) en cas dedéclenchement, entraînant la libération de l'indicateur (80) mécanique, lequel est sollicité vers la position active de mise en regard, d'un voyant (94) avec une fenêtre (98) ménagée dans la face avant (16).

## Patentansprüche

1. Motorantriebsblock zum Anbau an einen Leistungsschalter mit Kipphebel (11), der eine Einschaltstellung (F), eine Ausschaltstellung (O) und eine Ausschalt-Zwischenstellung (D) entsprechend einer fehlerbedingten Auslösung einnehmen kann und mit einem Kupplungsschieber (26) eines Übertragungsmechanismus' (12) gekoppelt ist, der mit einem Getriebemotor (14) sowie einem Not-Handantrieb mit an der Frontseite (16) des Antriebsblocks (10) montiertem Drehgriff (18) zusammenwirkt, wobei der Übertragungsmechanismus (12) eine erste Mitnehmerscheibe (40) aufweist, die einer kinematischen Kette zugeordnet ist, welche in der Lage ist, die Drehbewegungen des Getriebemotors (14) und des Drehgriffs (18) zum automatischen bzw. manuellen Aus- und Einschalten des Leistungsschalters auf den Kipphebel (11) und umgekehrt bei einer automatischen Auslösung des Leistungsschalters die Schwenkbewegung des Kipphebels (11) auf den Kupplungsschieber (26) zu übertragen,
dadurch gekennzeichnet, daß
- der Kupplungsschieber (26) zwei Rollen (36, 38) aufweist, die mit der beim Ausschalten und Einschalten im gleichen Drehsinn mitgeführten ersten Mitnehmerscheibe (40) zusammenwirken,
- eine bistabile mechanische Schaltzustandsanzeige (88) zwischen einer aktiven Stellung zur Anzeige einer Auslösung und einer inaktiven Stellung entsprechend einer Nichtauslösung verschwenkt werden kann,
- ein Auslösebügel (100) mit der Schaltzustandsanzeige (88) in Abhängigkeit von der Stellung des Kupplungsschiebers (26) zusammenwirkt, derart daß die Schaltzustandsanzeige (88) in der inaktiven Stellung verriegelt wird, wenn sich der Leistungsschalter in der Einschaltstellung (F) befindet, und im Auslösefall nach der Mitnahme des Kupplungsschiebers (26) durch den Kipphebel (11) in die aktive Stellung überführt werden kann, wobei die erste Mitnehmerscheibe (40) in ihrer Stellung verharrt, um den Drehgriff (18) in der Einschaltstellung zu blockieren,
- und eine Positionierscheibe (86) dazu dient, die Schaltzustandsanzeige (88) während der durch Verbringen des Drehgriffs (18) in die Ausschaltstellung erfolgenden Rückstellung erneut in die inaktive Stellung zu überführen.

2. Motorantriebsblock nach Anspruch 1, dadurch gekennzeichnet, daß an der Frontseite (16) ein Einstellelement (112) angebracht ist, das dazu dient, eine erste Einstellposition für Automatikbetrieb und eine zweite Einstellposition für Handbetrieb einzunehmen, wobei die Überführung von der ersten in die zweite Position eine automatische Umgehung des Getriebemotors (14) und/oder die Betätigung eines Kontakts (80) zur Blockierung der Fernbetätigungs-Schaltbefehle bewirkt.

3. Motorantriebsblock nach Anspruch 2, dessen Getriebemotor (14) einen mit einem Ritzel (48) zum Eingriff in einen Zahnkranz (44) gekoppelten Elektromotor (46) umfaßt, dadurch gekennzeichnet, daß das Einstellelement (112) einen Drehring (114) mit einer Ausrückgabel (116) umfaßt, die dazu dient, beim Übergang des Einstellelements (112) in die zweite Einstellposition das Ritzel (48) in der ausgekuppelten Stellung vom Zahnkranz (44) zu trennen und umgekehrt bei Überführung des Einstellelements (112) in entgegengesetzter Richtung in die erste Einstellposition das Eingreifen des Ritzels (48) in den Zahnkranz (44) in der eingekuppelten Stellung zu ermöglichen.

4. Motorantriebsblock nach einem der Ansprüche 1 bis 3, dadurch gekennzeichnet, daß der Getriebemotor (14), der Not-Handantrieb mit Drehgriff (18) und die kinematische Kette zur Ankopplung an die erste Mitnehmerscheibe (40) mit einem aufklappbaren Teil (22) verbunden sind, das schwenkbar auf einer Achse (21) eines feststehenden Anbausockels (20) zur Befestigung auf der Frontseite des Leistungsschalters gelagert ist, wobei die gleitende Hin- und Herbewegung des Kupplungsschiebers (26) mit Hilfe von Führungselementen (28, 30) im Sockelteil (20) erfolgt.

5. Motorantriebsblock nach Anspruch 3 oder 4, dadurch gekennzeichnet, daß die kinematische Kette des Übertragungsmechanismus' (12) eine erste Welle (42), auf der der Drehgriff (18), der Zahnkranz (44) und die erste Mitnehmerscheibe (40) koaxial gelagert sind, sowie eine das Ritzel (48) tragende zweite Welle (60) mit entgegengesetztem Drehsinn umfaßt, wobei die beiden Wellen (42, 60) parallel zueinander und senkrecht zur Frontseite (16) angeordnet sind.

6. Motorantriebsblock nach Anspruch 5, dadurch gekennzeichnet, daß der Motor (46) einen Elektromagneten (50) mit einem asymmetrischen Magnetkreis (52) umfaßt, welcher mit einem Schwinganker (58) zusammenwirkt, der über ein System zur Umwandlung der Schwingungen des Ankers (58) in eine schrittweise Einrichtungs-Drehbewegung mit einem bestimmten, dem Drehsinn (F2) der ersten Welle (42) entgegengesetzten Drehsinn (F3) einer zweiten Welle (60) zugeordnet ist, wobei der U-förmige Magnetkreis (52) eine erste ebene Polfläche (56), die in Anschlag gegen einen (66) der Arme des Ankers (58) gelangt, sowie eine zweite Polfläche (54) mit unterbrochener Oberfläche aufweist, die durch einen radialen Luftspalt ständig vom anderen Arm (64) des Ankers (58) getrennt ist.

7. Motorantriebsblock nach Anspruch 6, dadurch gekennzeichnet, daß das System zur Umwandlung der Bewegung des Ankers (58) ein erstes Freilaufrad (70) zur Mitnahme der zweiten Welle (60) in einem bestimmten Drehsinn (F3) sowie ein zweites Blockier-Freilaufrad (72) mit in bezug auf das erste Freilaufrad (70) umgekehrter Wirkrichtung umfaßt, das eine entgegengesetzte Drehung der zweiten Welle (60) verhindert.

8. Motorantriebsblock nach einem der Ansprüche 6 bis 7, dadurch gekennzeichnet, daß das Sockelteil (20) eine Anschlußklemmleiste (120) enthält, die nach dem Zurückschwenken des Teils (22) vom Sockel (20) zugänglich ist, wobei die genannte Klemmleiste beweglich gelagert ist, um den Durchgang zu dem an die Hilfsausrüstungen des Leistungsschalters grenzenden offenen Boden (23) freizugeben.

9. Motorantriebsblock nach einem der Ansprüche 5 bis 8, dadurch gekennzeichnet, daß die erste Welle (42) eine zweite Steuerscheibe (74) zur Betätigung einer Reihe von Kontakten (76, 78, 80, 82) mitführt, die auf einer gedruckten Schaltung einer Elektronikkarte (84) verteilt angeordnet sind.

10. Motorantriebsblock nach einem der Ansprüche 1 bis 9, dadurch gekennzeichnet, daß der Auslösebügel (100) einen Vorsprung (102) aufweist, der dazu dient, sich auf einem Absatz (104) des Kupplungsschiebers (26) abzustützen, wenn sich der Leistungsschalter in der Einschaltstellung F befindet, und um im Auslösefall in eine seitliche Aussparung (110) des Kupplungsschiebers (26) einzugreifen und so die mechanische Schaltzustandsanzeige (88) freizugeben, die in Richtung der aktiven Stellung entsprechend der Deckungslage zwischen einem Farbfeld (94) und einem in der Frontseite (16) ausgebildeten Sichtfenster (98) beaufschlagt wird.

## Claims

1. A remote control unit able to be fitted onto an electrical circuit breaker with pivoting handle (11) able to occupy a closed position (F), an open position (O), and an intermediate open after tripping on a fault position (D), the handle (11) being coupled to a transmission slide (26) of a mechanism (12) cooperating with a geared motor unit (14) and an emergency manual control with rotary handle (18) arranged on the front panel (16) of the unit (10), the mechanism (12) having a first drive cam (40) associated to a kinematic link system able to transmit the rotational movements of the handle (18) to the handle (11) for automatic and manual opening and closing operations of the circuit breaker and vice-versa the pivoting movement of the handle (11) to the transmission slide (26) when automatic tripping of the circuit breaker takes place,
characterized in that
- the transmission slide (26) comprises a pair of rollers (36, 38) cooperating with the first drive cam (40) animated with the same direction of rotation for the opening and closing operations,
- a bistable mechanical indicator (88) is movable between an active tripping signalling position and in inactive non-tripped position,
- a tripping push-rod (100) cooperates with the indicator (88) according to the position of the slide (26), so as to lock the indicator (88) in the inactive position when the circuit breaker is in the closed position (F), and to allow actuation of the indicator (88) to the active position following driving of the slide (26) by the handle (11) in case of tripping, the first cam (40) remaining fixed to immobilise the handle (18) in the closed position,
- and a positioning disk (86) is designed to return the indicator (88) to the inactive position in the resetting phase which takes place by actuation of the handle (18) to the open position.

2. The remote control unit according to claim 1, characterized in that the front panel (16) is equipped with a selector (112) designed to occupy a first adjustment position in automatic mode, and a second adjustment position in manual mode, moving from the first position to the second position causing automatic neutralisation of the geared motor unit (14), and/or actuation of a contact (80) inhibiting the electrical remote control orders.

3. The remote control unit according to claim 2, the geared motor unit (14) having an electric motor (46) coupled to a pinion (48) operating a transmission crown-wheel (44), characterized in that the selector (112) comprises a rotary ring (114) with a disengagement catch (115) arranged to separate the pinion (48) from the crown-wheel (44) in the disengaged position when the selector (112) is actuated to the second adjustment position, and vice-versa to engage the pinion (48) on the crown-wheel (44) in the engaged position when the selector (112) is inversely actuated to the first adjustment position.

4. The remote control unit according to one of the claims 1 to 3, characterized in that the assembly formed by the geared motor unit (14), emergency manual control with the handle (18) and kinematic link system with the first drive cam (40), is securedly united to a retractable part (22), mounted with rocking on a spindle (21) of a fixed base (20) which fits onto the front panel of the circuit breaker, the alternate sliding movement of the transmission slide (26) taking place in the base (20) by means of guide parts (28, 30).

5. The remote control unit according to claim 3 or 4, characterized in that the kinematic link system of the mechanism (12) comprises a first rotary shaft (42) on which are coaxially mounted the handle (18), transmission crown-wheel (44), and first drive cam (40), and a second shaft (60) with reverse rotation supporting the operating pinion (48), the two shafts (42, 60) extending parallel to one another in a direction perpendicular to the front panel (16).

6. The remote control unit according to claim 5, characterized in that the motor (46) comprises an electromagnet (50) with a dissymmetrical magnetic circuit (52) cooperating with an oscillating armature (58) associated to the second shaft (60) by means of a system for transforming the vibrational movement of the armature (58) into a unidirectional step-by-step movement, having a predetermined direction (F3) opposite to that (F2) of the first rotary shaft (42), the U-shaped magnetic circuit (52) comprising a first straight polar surface (56) against which one of the arms (66) of the armature (58), is stopped and a second discontinuous polar face (54) permanently separated from the other arm (64) of the armature (58) by a radial air-gap.

7. The remote control unit according to claim 6, characterized in that the transformation system of the movement of the armature (58) comprises a first free wheel (70) driving the second rotary shaft (60) in the predetermined direction (F3), and a second retaining free wheel (72), active in the opposite direction from the first free wheel (70) to oppose a reverse rotation of the second shaft (60).

8. The remote control unit according to one of the claims 6 to 7, characterized in that the base (20) houses a connection terminal block (120) accessible after relative tilting of the part (22) with respect to the base (20), said terminal block being mounted removable to clear the passage to the open end (23) in communication with the circuit breaker auxiliaries.

9. The remote control unit according to one of the claims 5 to 8, characterized in that the first rotary shaft (42) drives a second cam (74) to operate a series of contacts (76, 78, 80, 82) arranged on a printed circuit of a printed circuit board (84).

10. The remote control unit according to one of the claims 1 to 9, characterized in that the tripping push-rod (100) comprises a tenon (102) arranged to bear on an edge (104) of the slide (26) when the circuit breaker is in the closed position (F), and to engage in a lateral notch (110) of the slide (26) in case of tripping, resulting in releasing of the mechanical indicator (88), which is urged to the active position wherein a flag (94) is facing a window (98) arranged in the front panel (16).
